# EUROPEAN PATENT SPECIFICATION

(11) **EP 2 420 139 B1**
(45) Date of publication and mention of the grant of the patent: **22.11.2017**
(21) Application number: 11164743.4
(22) Date of filing: 04.05.2011
(51) Int. Cl.: A01M 21/04

(54) **Method and system for weed control**
Verfahren und System zur Unkrautbekämpfung
Méthode et système pour lutter contre les adventices

(30) Priority: 20.08.2010 NL 1038182
(43) Date of publication of application: 22.02.2012
(73) Proprietor: Groenaannemingsbedrijf Punt B.V., 3067 GN Rotterdam (NL)
(72) Inventor: Punt, Bastiaan, 3068 RE, Rotterdam (NL)
(74) Representative: Patentwerk B.V.

(56) References cited:
- WO-A1-97/03557
- WO-A1-2005/060744
- CN-Y- 2 314 250
- CN-Y- 201 212 699
- DE-A1- 3 727 291
- DE-U1- 29 702 238
- DE-U1-202009 015 831
- GB-A- 2 306 151
- US-A- 5 430 970

## Description

The present invention relates to a method and system for weed control.

Many devices and methods for weed control are known with varying labour-intensity and environmental impact. Particularly in respect of this latter aspect there is a tendency to use the fewest possible toxins or none at all. One method for weed control known for a long time is therefore to use hot water which is sprayed over the areas to be rid of weed, see e.g. DE 37 27 291 Al, which discloses a part of claim 1 and the preamble of claim 5. An example of such a device is known from British patent application GB 2 306 151, which describes a reservoir with which water can be manually delivered to weed in controlled manner. Although such a device could be applied to sprinkle a patio or garden path, it is not suitable for large-scale use since, with a view to handling of the device, the reservoir is of necessity relatively small. Another drawback precluding large-scale use is that a larger amount of water would already have cooled before being sprinkled over the weed.

For larger-scale applications it is usual to obviate these drawbacks using devices with which the water is heated immediately before use on the basis of a fossil fuel burner. An example of such a device, wherein a water reservoir and a heating device are mounted on a watering truck is given by the German Gebrauchsmuster DE 297 02 238.

Although in such a solution the use of hot water is still environmentally-friendly in the sense that no chemicals are left behind on the area to be rid of weed, the combustion of the fossil fuel to obtain the hot water has an environmental impact in that emission of CO2 and particulates now occurs locally, this being particularly undesirable in urban environments. Other drawbacks are the noise and the stench caused by this type of device at the weed control location. As well as being caused by the burner for obtaining the hot water, these drawbacks are also the result of the engine of the vehicle, which as a rule also comprises a combustion engine.

It is therefore an object of the present invention to at least partially obviate the above stated drawbacks, or to provide a worthwhile alternative.

For this purpose the invention first provides a method according to claim 1 for controlling weed in an area.

Heating the water at the heating location achieves multiple advantages. Firstly, the necessity of local combustion, and thereby the spread of exhaust gases, particulate emission, sound and stench nuisance is reduced, this being an advantage particularly in built-up areas such as a city centre. In addition, the device can hereby be given a more compact form; also an advantage in urban areas, where relatively high demands are made of the manoeuvrability of a vehicle.

By making use of a heating location, which can be a fixed, permanent and/or central location where the water is heated centrally, this can take place with a high efficiency, wherein not only the heating itself but also keeping the water hot can take place in optimal manner. This efficiency can be increased further by storing the water, once it has been heated, in insulated manner in the watering vehicle, for instance in a thermos reservoir which can for this purpose take a double-walled form.

In addition to transporting the watering vehicle to the area to be rid of weed, a reservoir for supplying the watering vehicle locally is also transported to the area to be rid of weed. Weed can hereby be controlled in an area larger than the area for which the hot water supply of the vehicle is sufficient. The present invention comprises of displacing one or more watering vehicles and a supply reservoir together to the (vicinity of) the area where the weed has to be controlled.

Heating the water at the heating location preferably takes place by means of green energy or energy from waste, in particular energy from burning waste wood. Because controlling weed and removing unnecessary vegetation, which produces waste wood, are generally tasks which are carried out or outsourced by a municipal authority, waste wood, for instance from parks or public gardens, is usually readily available. The use of the combustion heat of this waste for heating water hereby contributes toward a small environmental impact.

Displacing the vehicle preferably takes place in emission-free manner. Emission-free is understood to mean emission-free at least locally or at least during use. Emission may well occur however when generating or storing the energy for displacing the vehicle.

Emission-free displacement is for instance possible in that the vehicle is non-motorized but, when use is made of a motorized vehicle, which may be recommended in order to ensure that the water arrives at its destination before it has cooled too much, an electrically driven vehicle is a favourable embodiment.

An accumulator or battery of the electric vehicle can be charged via the mains electricity or via green energy, or optionally even (waste) combustion energy, such as that of waste wood. The use of an electrically driven vehicle also has the advantage that it produces little noise compared to vehicles with a combustion engine, this advantage being enhanced by the use of hot water instead of steam, since the release of steam is generally also accompanied by considerable noise. This type of drive is also favourable because of the fact than an electrical drive uses no energy when the vehicle is stationary, this being quite often the case during the eradication of weed. A combustion engine must in such a case remain idling, resulting in noise and emission. A vehicle for use in the above described method comprises a reservoir for hot water, a sprayer for spraying an area to be rid of weed with the hot water from the reservoir, and preferably a drive which is emission-free during use, such as an electrical drive. The vehicle is preferably embodied as a (truck) automobile and provided with all the usual requirements for being allowed on the public highway.

In a particular embodiment the vehicle itself is provided with a wood burner for heating water. Such an embodiment is particularly suitable for removing weed in areas which lie too far away from a central heating device, or when the small-scale nature of an area makes it uneconomical to apply a central heating device.

The reservoir can be adapted to receive (preheated) water and can comprise for this purpose a suction device or have an opening through which water can be supplied using a separate device. The water used can for instance be collected rainwater or ditch or canal water, which can be filtered. If the vehicle is intended to receive preheated water, the reservoir can be embodied as thermally insulated reservoir, such as a double-walled reservoir, adapted to receive preheated water.

The invention also relates to an assembly according to claim 5 for controlling weed in an area. The heating device for heating water can be located at a distance from the location at which weed must be controlled. For instance when the heating location is situated in an outlying area where water can be obtained or when the heating device is situated in an outlying area where wood waste is collected, for instance on an industrial estate or close to a waste collection plant.

The invention further provides for this purpose a vehicle for transporting a supply reservoir from the heating location to the area where weed must be controlled. Such a vehicle is particularly also adapted to transport one or more spraying vehicles. In this way the spraying vehicles need only be deployed locally, which facilitates the use of an electrical drive. Also taking a supply reservoir has the result that weed can be removed from a larger area before needing to return to the heating device. According to an embodiment, the system is suitable for heating the water in the supply reservoir, wherein the supply reservoir is filled with water and has a connection for water supply and a connection for water discharge, wherein the connections for water supply and water discharge are mutually connected via a heat exchanger and a pump. In this manner water from the reservoir can be circulated along the heat exchanger so that the temperature of the water in the reservoir increases while being circulated and heated.

The heat exchanger is provided with heat here in that it is incorporated in a closed system for generating heat, for instance a combustion device for wood waste.

This system has the advantage that the water is heated directly in the supply container and so does not have to be transferred, and that the spray water, which is generally rainwater, ditch-water or canal water, cannot contaminate the heating system.

In yet another embodiment the supply reservoir and the reservoir of the at least one watering truck are adapted for mutual coupling so that the reservoir of the watering truck can be incorporated in the pump circuit and the water of the watering truck can be heated simultaneously.

The invention will now be elucidated with reference to the following figures. Herein:
- Figure 1 shows a schematic view of a first embodiment of a device according to the present invention;
- Figure 2 shows a schematic view of a second embodiment of a device according to the present invention; and
- Figure 3 shows a schematic view of a system according to the present invention.

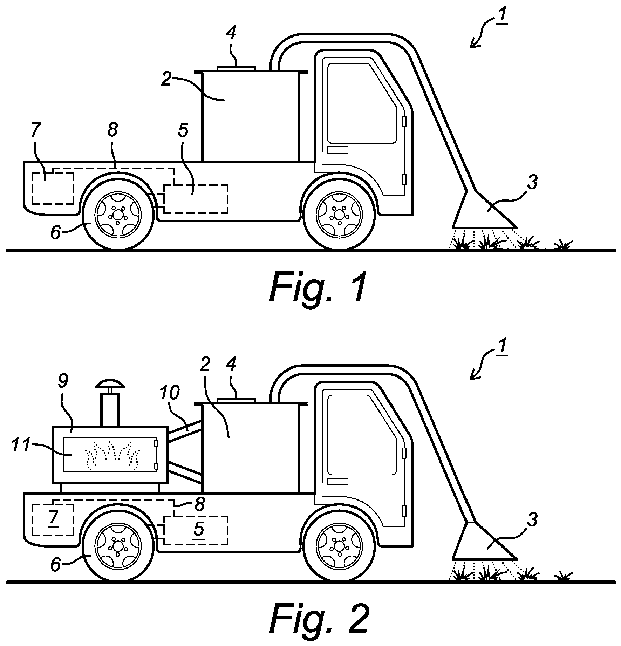

Figure 1 shows a first embodiment of a vehicle 1 according to the present invention, provided with a reservoir 2 for holding hot water, preferably between 70 and 100-110 degrees, and in particular above 95 degrees, which can be sprayed over weed to be controlled by means of sprayer 3. Reservoir 2 can be filled by means of supply opening 4. The vehicle is provided with an electrical drive 6 coupled to an electric motor 5 which is powered by battery 7, to which it is electrically coupled 8.

Figure 2 shows an alternative embodiment of vehicle 1 of figure 1. In figure 2 corresponding reference numerals designate the same components. The embodiment of figure 2 differs from that of figure 1 in that the vehicle is provided with a burner 9 for (waste) wood connected 10 to reservoir 2. Burner 9 is provided with a feed 11 for wood and is adapted to heat water present in reservoir 2 to a temperature between 70 and 100 degrees, and in particular above 95 degrees.

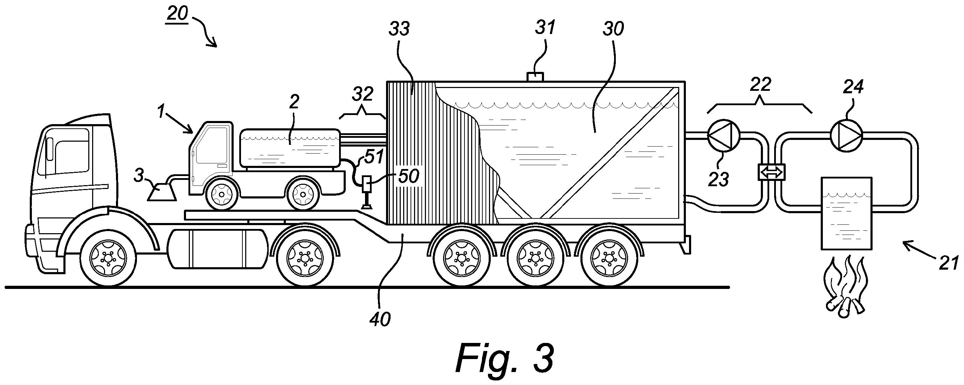

Figure 3 shows an overview of a system 20 with diverse components according to the present invention. The system comprises a heating device 21 for water, represented in the shown exemplary embodiment as a wood burning device. Heating device 21 can be connected to a supply reservoir 30 via a heat exchanger. The water in supply reservoir 30 can be circulated along heat exchanger 22 by means of pumps 23, 24 so that the water in reservoir 30 is heated.

In a practical embodiment the water reservoir is dimensioned to comprise between 5,000 and 50,000 litres of water, and particularly between 15,000 and 25,000 litres of water, and still more particularly around 20,000 litres of water. It has been found that in the course of a night such a supply of water can be heated by means of a waste wood burning device to a temperature close to boiling point, i.e. between 95 and 100 degrees, and in particular around 99 degrees Celsius. In a further embodiment supply reservoir 30 is provided with one or more thermal insulations and can be further provided with a heating system for reheating the water after cooling when the supply reservoir is situated at a location to be rid of weed.

Supply reservoir 30 is further provided with a filling opening 31 and can be provided for further insulation purposes with plating 33 (hatched) for protection from airflow brought about by the moving vehicle. Such an airflow occurs when vehicle 40 on which reservoir 30 is situated is displaced, for instance from the heating location to a location where weed control must take place. Vehicle 40 is also adapted to transport a watering vehicle 1 as shown in figure 1. Liquid reservoir 2 of watering vehicle 1 is coupled to reservoir 30 by means of connection 32, and is thus adapted to also circulate the water to be heated. The water in reservoir 2 will thus also be heated during heating of the water in liquid reservoir 30. Reservoir 2 is preferably adapted to comprise between 100 and 1000, and particularly between 500 and 1000, and still more particularly around 750 litres of water. With such a quantity of water half an hour of spraying is for instance possible at a travel speed of for instance about 5 km/h. In addition to a fixed sprayer 3 an optionally releasable manual sprayer 50 can be provided on the watering truck, which sprayer can be connected by means of a hose 51 for immediate use or to be filled at the weed control location. In this way it is also possible to access locations even watering vehicle 1 cannot reach.

Diverse variants are possible in addition to the shown embodiments and are all deemed to fall within the scope of protection of the following claims.

## Claims

1. Method for controlling weed in an area, comprising of:
- heating water at least at one heating location;
- supplying the heated water to the reservoir (2) of at least one watering vehicle (1), optionally at the heating location;
- displacing the vehicle to the area with the weed to be controlled;
- displacing a thermally insulated supply reservoir (30) with the hot water to the area with the weed to be controlled for locally supplying hot water to the at least one vehicle reservoir; and
- spraying the weed with the hot water from the vehicle while displacing the vehicle through the area.

2. Method as claimed in claim 1, comprising of heating the water at the heating location by means of green energy or energy from waste, in particular energy from burning waste wood.

3. Method as claimed in any of the preceding claims, comprising of displacing the vehicle with emission-free driving.

4. Method as claimed in claim 3, comprising of charging an accumulator or battery of the vehicle using a sustainable energy source.

5. System for controlling weed in an area, comprising:
- at least one vehicle (1) provided with:
∘ a reservoir (2) for hot water, and
∘ a sprayer (3) for spraying an area to be rid of weed with the hot water from the reservoir, **characterized by**
- a transportable thermally insulated supply reservoir (30) with a capacity greater than the capacity of the reservoir of the at least one vehicle for locally supplying hot water to the at least one vehicle reservoir,
- at least one heating device (21) for heating water and supplying the heated water to the reservoir of at least one vehicle.

6. System as claimed in claim 5, wherein the vehicle reservoir is a thermally insulated reservoir, such as a double-walled reservoir, adapted to receive preheated water.

7. System as claimed in claim 5 or 6, wherein the vehicle is provided with a drive which is emission-free during use, such as an electrical drive.

8. System as claimed in any of the claims 5-7, wherein the supply reservoir is adapted to be coupled by means of a heat exchanger to the at least one heating device for the purpose of heating the water in the reservoir.

9. System as claimed in any of the claims 5-8, wherein the transportable thermally insulated supply reservoir forms part of a transport vehicle which is also adapted to transport at least one vehicle according to claim 6 or 7.

10. System as claimed in any of the claims 5-9, comprising at least one fixed heating location.

11. System as claimed in any of the claims 5-10, wherein the vehicle reservoir is adapted to comprise between 100 and 1000 litres of water, and particularly between 500 and 1000 litres of water, and still more particularly around 750 litres of water.

12. System as claimed in any of the claims 5-11, wherein the supply reservoir is dimensioned to comprise between 5,000 and 50,000 litres of water, and particularly between 15,000 and 25,000 litres of water, and still more particularly around 20,000 litres of water.

## Patentansprüche

1. Verfahren zur Bekämpfung von Unkraut in einem Gebiet, aufweisend:
- Erhitzen von Wasser an mindestens einem Heizungsort;
- Zuführen des erhitzten Wassers zu dem Reservoir (2) mindestens eines Bewässerungsfahrzeugs (1), optional an dem Heizungsort;
- Verschieben des Fahrzeugs in das Gebiet mit dem zu bekämpfenden Unkraut;
- Verschieben eines thermisch isolierten Vorratsreservoirs (30) mit dem heißen Wasser in das Gebiet mit dem zu bekämpfenden Unkraut, um dem mindestens einen Fahrzeugreservoir lokal heißes Wasser zuzuführen; und
- Besprühen des Unkrauts mit dem heißen Wasser aus dem Fahrzeug, während das Fahrzeug durch das Gebiet verschoben wird.

2. Verfahren nach Anspruch 1, aufweisend das Erhitzen des Wassers an dem Heizungsort mittels grüner Energie oder Energie aus Abfällen, insbesondere Energie aus verbrennendem Abfallholz.

3. Verfahren nach einem der vorhergehenden Ansprüche, aufweisend Verschieben des Fahrzeugs durch emissionsfreies Fahren.

4. Verfahren nach Anspruch 3, aufweisend Aufladen eines Akkumulators oder einer Batterie des Fahrzeugs unter Verwendung einer nachhaltigen Energiequelle.

5. System zur Bekämpfung von Unkraut in einem Gebiet, aufweisend:
- mindestens ein Fahrzeug (1), das ausgestattet ist mit:
∘ einem Reservoir (2) für heißes Wasser, und
∘ einer Sprühvorrichtung (3) zum Besprühen eines Gebietes, in dem Unkraut entfernt werden soll, mit dem heißen Wasser aus dem Reservoir, **gekennzeichnet durch**
- ein transportables thermisch isoliertes Vorrats-reservoir (30) mit einer Kapazität, die größer ist als die Kapazität des Reservoirs des mindestens einen Fahrzeugs, um dem mindestens einen Fahrzeugreservoir lokal heißes Wasser zuzuführen,
- mindestens eine Heizungsvorrichtung (21) zum Erhitzen von Wasser und Zuführen des erhitzten Wassers zu dem Reservoir mindestens eines Fahrzeugs.

6. System nach Anspruch 5, wobei das Fahrzeugreservoir ein thermisch isoliertes Reservoir, wie beispielsweise ein doppelwandiges Reservoir, ist, das eingerichtet ist, vorgewärmtes Wasser aufzunehmen.

7. System nach Anspruch 5 oder 6, wobei das Fahrzeug mit einem Antrieb, der bei Verwendung emissionsfrei ist, wie beispielsweise einem elektrischen Antrieb, ausgestattet ist.

8. System nach einem der Ansprüche 5 bis 7, wobei das Vorratsreservoir dazu eingerichtet ist, mittels eines Wärmetauschers an die mindestens eine Heizvorrichtung gekoppelt zu sein, um das Wasser in dem Reservoir zu erhitzen.

9. System nach einem der Ansprüche 5 bis 8, wobei das transportable thermisch isolierte Vorratsreservoir Teil eines Transportfahrzeugs bildet, das auch dazu eingerichtet ist, mindestens ein Fahrzeug nach Anspruch 6 oder 7 zu transportieren.

10. System nach einem der Ansprüche 5 bis 9, aufweisend mindestens einen festen Heizungsort.

11. System nach einem der Ansprüche 5 bis 10, wobei das Fahrzeugreservoir dazu eingerichtet ist, zwischen 100 und 1000 Liter Wasser, und vorzugsweise zwischen 500 und 1000 Liter Wasser, und noch mehr bevorzugt etwa 750 Liter Wasser, aufzuweisen.

12. System nach einem der Ansprüche 5 bis 11, wobei das Vorratsreservoir bemessen ist, zwischen 5.000 und 50.000 Liter Wasser, und vorzugsweise zwischen 15.000 und 25.000 Liter Wasser, und noch mehr bevorzugt etwa 20.000 Liter Wasser, aufzuweisen.

## Revendications

1. Procédé pour lutter contre les mauvaises herbes dans un espace, composé de :
- le chauffage d'eau au moins à un emplacement de chauffage ;
- la fourniture de l'eau chauffée au réservoir (2) d'au moins un véhicule d'arrosage (1), optionnellement à l'emplacement de chauffage ;
- le déplacement du véhicule jusqu'à l'espace avec les mauvaises herbes contre lesquelles il faut lutter ;
- le déplacement d'un réservoir d'alimentation thermiquement isolé (30) avec l'eau chaude jusqu'à l'espace avec les mauvaises herbes contre lesquelles il faut lutter pour fournir localement de l'eau chaude à l'au moins un réservoir de véhicule ; et
- la pulvérisation, sur les mauvaises herbes, de l'eau chaude à partir du véhicule durant le déplacement du véhicule à travers l'espace.

2. Procédé selon la revendication 1, composé du chauffage de l'eau à l'emplacement de chauffage au moyen d'énergie verte ou d'énergie de déchets, en particulier d'énergie de l'incinération de déchets en bois.

3. Procédé selon l'une quelconque des revendications précédentes, composé du déplacement du véhicule avec conduite sans émissions.

4. Procédé selon la revendication 3, composé de la charge d'un accumulateur ou d'une batterie du véhicule en utilisant une source d'énergie durable.

5. Système pour lutter contre les mauvaises herbes dans un espace, comprenant :
- au moins un véhicule (1) pourvu de :
∘ un réservoir (2) pour de l'eau chaude, et
∘ un pulvérisateur (3) pour la pulvérisation, dans un espace dont les mauvaises herbes doivent être éliminées, de l'eau chaude du réservoir, **caractérisé par**
- un réservoir d'alimentation thermiquement isolé transportable (30) avec une capacité supérieure à la capacité du réservoir de l'au moins un véhicule pour fournir localement de l'eau chaude à l'au moins un réservoir de véhicule,
- au moins un dispositif de chauffage (21) pour le chauffage d'eau et la fourniture de l'eau chauffée au réservoir d'au moins un véhicule.

6. Système selon la revendication 5, dans lequel le réservoir de véhicule est un réservoir thermiquement isolé, tel qu'un réservoir à double paroi, adapté pour recevoir de l'eau préchauffée.

7. Système selon la revendication 5 ou 6, dans lequel le véhicule est pourvu d'un entraînement qui est sans émissions durant l'utilisation, tel qu'un entraînement électrique.

8. Système selon l'une quelconque des revendications 5 à 7, dans lequel le réservoir d'alimentation est adapté pour être couplé au moyen d'un échangeur de chaleur à l'au moins un dispositif de chauffage dans le but du chauffage de l'eau dans le réservoir.

9. Système selon l'une quelconque des revendications 5 à 8, dans lequel le réservoir d'alimentation thermiquement isolé transportable fait partie d'un véhicule de transport qui est également adapté pour transporter au moins un véhicule selon la revendication 6 ou 7.

10. Système selon l'une quelconque des revendications 5 à 9, comprenant au moins un emplacement de chauffage fixe.

11. Système selon l'une quelconque des revendications 5 à 10, dans lequel le réservoir de véhicule est adapté pour comprendre entre 100 et 1000 litres d'eau, et particulièrement entre 500 et 1000 litres d'eau, et encore plus particulièrement environ 750 litres d'eau.

12. Système selon l'une quelconque des revendications 5 à 11, dans lequel le réservoir d'alimentation est dimensionné pour comprendre entre 5000 et 50000 litres d'eau et particulièrement entre 15000 et 25000 litres d'eau, et encore plus particulièrement environ 20000 litres d'eau.
